(19) Europäisches Patentamt
European Patent Office
Office européen des brevets

(11) Veröffentlichungsnummer: **0 064 637**
**B1**

# (12) EUROPÄISCHE PATENTSCHRIFT

(45) Veröffentlichungstag der Patentschrift: **12.09.84**

(51) Int. Cl.³: **C 08 F 10/00**, C 08 F 4/68

(21) Anmeldenummer: **82103401.4**

(22) Anmeldetag: **22.04.82**

(54) **Verfahren zur Herstellung von Homo- und Copolymerisaten von Monoolefinen durch Polymerisation des bzw. der Monomeren mittels eines Ziegler-Katalysatorsystems auf der Basis einer Vanadium enthaltenden Katalysatorkomponente.**

(30) Priorität: **02.05.81 DE 3117397**

(43) Veröffentlichungstag der Anmeldung: **17.11.82 Patentblatt 82/46**

(45) Bekanntmachung des Hinweises auf die Patenterteilung: **12.09.84 Patentblatt 84/37**

(84) Benannte Vertragsstaaten: **AT BE DE FR GB IT**

(56) Entgegenhaltungen:
**DE - A - 2 830 098**
**FR - A - 2 359 156**
**FR - A - 2 376 876**

(73) Patentinhaber: **BASF Aktiengesellschaft, Carl-Bosch-Strasse 38, D-6700 Ludwigshafen (DE)**

(72) Erfinder: **Bachl, Robert, Dr., Richard-Wagner-Strasse 61, D-6520 Worms (DE)**
Erfinder: **Hoehr, Lothar, Dr., Giselherstrasse 14, D-6520 Worms (DE)**
Erfinder: **Klaerner, Peter, Dr., Hauptstrasse 62, D-6719 Battenberg (DE)**
Erfinder: **Gruber, Wolfgang, Dr., Lorscher Ring 2B, D-6710 Frankenthal (DE)**

**EP 0 064 637 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt im Rahmen eines Verfahrens zum Herstellen von Homo- und Copolymerisaten von $C_2$- bis $C_6$-$\alpha$-Monoolefinen durch Polymerisation des bzw. der Monomeren bei Temperaturen von 30 bis 200° C und Drücken von 1 bis 200 bar mittels eines Ziegler-Katalysatorsystems aus

(1) einer Vanadium enthaltenden Katalysatorkomponente,

(2) einer Aluminium enthaltenden Katalysatorkomponente der Formel

$$R^1-\underset{\underset{R^3}{|}}{Al}-R^2$$

worin stehen

$R^1$ für eine $C_1$- bis $C_{18}$-, insbesondere $C_2$- bis $C_4$-Alkylgruppe,

$R^2$ für eine $C_1$- bis $C_{18}$-, insbesondere $C_2$- bis $C_4$-Alkylgruppe und

$R^3$ für eine $C_1$- bis $C_{18}$-, insbesondere $C_2$- bis $C_4$-Alkylgruppe, eine $C_1$- bis $C_{12}$-, insbesondere $C_2$- bis $C_4$-Alkoxigruppe oder ein Chloratom, sowie

(3) – gegebenenfalls – einem $C_1$- bis $C_{12}$-Halogenkohlenwasserstoff,

mit den Massgaben, dass das Atomverhältnis Vanadium aus der Katalysatorkomponente (1) : Aluminium aus der Katalysatorkomponente (2) im Bereich von 1 : 0,1 bis 1 : 500, insbesondere 1 : 4 bis 1 : 200 und – im gegebenen Fall – das Molverhältnis Katalysatorkomponente (3): Aluminium aus der Katalysatorkomponente (2) im Bereich von 1 : 0,1 bis 1 : 60, insbesondere 1 : 1 bis 1 : 25, liegt.

Polymerisationsverfahren dieser Gattung sind bekannt, wobei im gegebenen Zusammenhang als ein typisches Beispiel das in der DE-OS Nr. 2830098 beschriebene gelten kann.

Das genannte Verfahren hat – ebenso wie in Parallele zu setzende andere Verfahren – zum Kernstück eine in besonderer Weise hergestellte und damit in besonderer Weise ausgestaltete Vanadium enthaltende Katalysatorkomponente (1).

Die besonderen Ausgestaltungen der Vanadium enthaltenden Katalysatorkomponente werden vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit der Katalysatorsysteme (1) erhöht ist.

(b) Katalysatorsysteme, durch die weniger bzw. kein Halogen in das Polymerisat eingebracht wird; – was zu erreichen ist, indem

($b_1$) die Ausbeute gemäss (a) gesteigert wird und/oder

($b_2$) Vanadium enthaltende Katalysatorkomponenten eingesetzt werden, die möglichst wenig bzw. kein Halogen enthalten.

(c) Katalysatorsysteme, die ihre positiven Wirkungen auch bei relativ niederen Temperaturen entfalten; – was z.B. für Trockenphasenpolymerisationen von Bedeutung sein kann.

(d) Katalysatorsysteme, durch welche die morphologischen Eigenschaften der Polymerisate in bestimmter Weise beeinflusst werden, etwa im Sinne einer einheitlichen Korngrösse und/oder einer Verminderung des Feinstkornanteils und/oder eines hohen Schüttgewichtes; – was z.B. für die technische Beherrschung der Polymerisationssysteme, die Aufarbeitung der Polymerisate und/oder die Verarbeitbarkeit der Polymerisate von Bedeutung sein kann.

(e) Katalysatorsysteme, die einfach und sicher herzustellen und gut handzuhaben sind; – z.B. solche, die sich in (inerten) Kohlenwasserstoff-Hilfsmedien zubereiten lassen.

(f) Katalysatorsysteme, die es ermöglichen, bei Polymerisationen unter Einwirkung von Molekulargewichtsreglern, wie Wasserstoff, mit relativ geringen Mengen an Regler auszukommen; – was z.B. für die Thermodynamik der Verfahrensführung von Bedeutung sein kann.

(g) Katalysatorsysteme, die auf spezielle Polymerisationsverfahren zugeschnitten sind; – etwa solche, die z.B. entweder auf die spezifischen Besonderheiten der Suspensionspolymerisation oder auf die spezifischen Besonderheiten der Trockenphasenpolymerisation abgestimmt sind.

Nach den bisherigen Erfahrungen gibt es unter den mannigfachen Zielen etliche Ziele, die man durch besondere Ausgestaltungen der Vanadium enthaltenden Katalysatorkomponente nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muss.

In diesem Rahmen liegt auch die Aufgabenstellung der vorliegenden Erfindung: Eine neue Art Vanadium enthaltender Katalysatorkomponente aufzuzeigen, mit der man gegenüber bekannten Vanadium enthaltenden Katalysatorkomponenten – unter vergleichbarer Zielsetzung – bessere Ergebnisse erreichen kann, insbesondere was die vorgenannten Ziele (a) und (f) betrifft.

Es wurde gefunden, dass die gestellte Aufgabe gelöst werden kann mit einer Vanadium enthaltenden Katalysatorkomponente, die erhalten wird, wenn man ein mehrwertiges Alkanol und spezifische Aluminiumalkyle unter bestimmten Bedingungen zu einem Feststoff umsetzt und diesen seinerseits unter bestimmten Bedingungen mit spezifischen, für Ziegler-Katalysatorsysteme üblichen Vanadiumverbindungen behandelt.

Gegenstand der vorliegenden Erfindung ist dementsprechend ein Verfahren zum Herstellen von Homo- und Copolymerisaten von $C_2$- bis $C_6$-$\alpha$-Monoolefinen durch Polymerisation des bzw. der Monomeren bei Temperaturen von 30 bis 200° C und Drücken von 1 bis 200 bar mittels eines Ziegler-Katalysatorsystems aus

(1) einer Vanadium enthaltenden Katalysatorkomponente,

(2) einer Aluminium enthaltenden Katalysatorkomponente der Formel

$$R^1-Al-R^2$$
$$|$$
$$R^3$$

worin stehen

$R^1$ für eine $C_1$- bis $C_{18}$-, insbesondere $C_2$- bis $C_4$-Alkylgruppe,

$R^2$ für eine $C_1$- bis $C_{18}$-, insbesondere $C_2$- bis $C_4$-Alkylgruppe und

$R^3$ für eine $C_1$- bis $C_{18}$-, insbesondere $C_2$- bis $C_4$-Alkylgruppe, eine $C_1$- bis $C_{12}$-, insbesondere $C_2$- bis $C_4$-Alkoxigruppe oder ein Chloratom, sowie

(3) – gegebenenfalls – einem $C_1$- bis $C_{12}$-Halogenkohlenwasserstoff,

mit den Massgaben, dass das Atomverhältnis Vanadium aus der Katalysatorkomponente (1): Aluminium aus der Katalysatorkomponente (2) im Bereich von 1:0,1 bis 1:500, insbesondere 1:4 bis 1:200 und – im gegebenen Fall – das Molverhältnis Katalysatorkomponente (2) im Bereich von 1:0,1 bis 1:60, insbesondere 1:1 bis 1:25, liegt.

Das erfindungsgemässe Verfahren ist dadurch gekennzeichnet, dass als Vanadium enthaltende Katalysatorkomponente (1) eingesetzt wird der Feststoff (F), der erhalten worden ist, indem man zunächst

(1.1) in einer ersten Stufe

(1.1.1) ein zumindest drei Kohlenstoffatome sowie zumindest zwei Hydroxylgruppen aufweisendes Alkanol und

(1.1.2) ein Aluminiumalkyl der Formel

$$R^4-Al-R^5$$
$$|$$
$$R^6$$

worin stehen

$R^4$ für eine $C_1$- bis $C_{18}$-, insbesondere $C_2$-bis $C_4$-Alkylgruppe,

$R^5$ für eine $C_1$- bis $C_{18}$-, insbesondere $C_2$- bis $C_4$-Alkylgruppe oder eine $C_1$- bis $C_{12}$-, insbesondere $C_1$- bis $C_4$-Alkoxigruppe und

$R^6$ für eine $C_1$- bis $C_{18}$-, insbesondere $C_2$- bis $C_4$-Alkylgruppe, eine $C_1$- bis $C_{12}$-, insbesondere $C_1$- bis $C_4$-Alkoxygruppe oder ein Chloratom,

in der 1- bis 50fachen Volumenmenge – bezogen auf das Aluminiumalkyl (1.1.2) – eines flüssigen, inerten Kohlenwasserstoffs zusammenbringt, mit der Massgabe, dass auf 1 Mol der in dem Alkanol (1.1.1) enthaltenen Hydroxylgruppen 0,5 bis 15, insbesondere 0,7 bis 5 Mole der in dem Aluminiumalkyl (1.1.2) enthaltenen Alkylgruppen entfallen, das Zusammengebrachte unter ständiger Durchmischung 0,2 bis 6, insbesondere 0,5 bis 4 Stunden auf einer Temperatur im Bereich von 0 bis 120, insbesondere 20 bis 100° C hält – wobei ein Gemisch aus einem Feststoff und einer Flüssigkeit resultiert –, dann

(1.2) in einer zweiten Stufe

(1.2.1) den aus Stufe (1.1) resultierenden Feststoff – gegebenenfalls ohne die ihn begleitende Flüssigkeit abgetrennt zu haben –, und

(1.2.2) eine Übergangsmetallverbindung der Formel bzw. Zusammensetzung $VCl_4$, $VOCl_3$, $VO(OR^7)_3 \cdot nTi(OR^7)_4$ oder $VCl_4 \cdot nTiCl_4$ – wobei $R^7$ für eine $C_1$- bis $C_{18}$-, insbesondere $C_2$- bis $C_6$-Alkylgruppe oder eine Phenylgruppe und n für eine Zahl zwischen 0 und 9 steht –,

in einem flüssigen, inerten Kohlenwasserstoff zusammenbringt, mit der Massgabe, dass auf 1 Mol der in dem Alkanol (1.1.1) ursprünglich enthaltenen Hydroxylgruppen 0,1 bis 2, insbesondere 0,25 bis 1 Mol des in der Übergangsmetallverbindung (1.2.2) enthaltenen Übergangsmetalls entfallen, das Zusammengebrachte unter ständiger Durchmischung 0,1 bis 10, insbesondere 0,2 bis 2 Stunden auf einer Temperatur im Bereich von 0 bis 100, insbesondere 20 bis 80° C hält – wobei abermals ein Gemisch aus einem Feststoff und einer Flüssigkeit anfällt –, und hierauf

(1.3) – gegebenenfalls – in einer dritten Stufe aus dem in Stufe (1.2) anfallenden Gemisch den Feststoff abtrennt, gewünschtenfalls mit einem unter Normalbedingungen flüssigen und unterhalb von 150, insbesondere unterhalb von 100° C siedenden inerten Kohlenwasserstoff wäscht sowie trocknet;

und derart mit dem gemäss Stufe (1.2) erhaltenen, im Gemisch oder dem gemäss Stufe (1.3) erhaltenen, in Substanz vorliegenden Feststoff (F) die neue Vanadium enthaltende Katalysatorkomponente (1) gewinnt.

Zu dem erfindungsgemässen Verfahren ist im einzelnen das Folgende zu bemerken:

Das Polymerisationsverfahren als solches kann – unter Beachtung der kennzeichnenden Besonderheiten – in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren oder Trockenphasen-Polymerisationsverfahren. Die erwähnten technologischen Ausgestaltungen – mit anderen Worten: die technologischen Varianten der Polymerisation von Olefinen nach Ziegler – sind aus der Literatur und Praxis wohlbekannt, so dass sich nähere Ausführungen zu ihnen erübrigen. Zu bemerken ist allenfalls noch, dass die neue Vanadium enthaltende Katalysatorkomponente (1) – wie entsprechende bekannte Katalysatorkomponenten – z.B. ausserhalb oder innerhalb des Polymerisationsgefässes mit der Katalysatorkomponente (2) zusammengebracht werden kann; im letztgenannten Fall etwa durch räumlich getrennten Eintrag der Komponenten, die im übrigen in Form einer Suspension (Katalysatorkomponente (1)) bzw. Lösung (Katalysatorkomponente (2)) gehandhabt werden können. Auch ist es z.B. möglich, die Katalysatorkomponente (1) oder die vereinigten Katalysatorkomponenten (1) und (2) in Form von Partikeln einzusetzen, die mit einer Umhüllung aus Wachs versehen sind; – eine Arbeitsweise, die beim Trockenphasen-Polymerisationsverfahren von Vorteil sein kann.

Zu der neuen Vanadium enthaltenden Katalysatorkomponente (1) selbst ist das Folgende zu sagen:

Ihre Herstellung erfolgt in zwei bzw. drei Stufen, die oben sowie nachstehend mit (1.1), (1.2) und (1.3) bezeichnet sind; zu ihnen ist im einzelnen zu bemerken:

Stufe (1.1)

In ihr wird das Alkanol (1.1.1) mit dem Aluminiumalkyl (1.1.2) in einem flüssigen, inerten Kohlenwasserstoff zusammengebracht und das Zusammengebrachte unter ständiger Durchmischung über die angegebene Zeitspanne auf einer Temperatur im angegebenen Bereich gehalten, wobei ein Gemisch aus einem Feststoff und einer Flüssigkeit resultiert. Wie sich gezeigt hat, kann man dabei zweckmässigerweise so verfahren, dass man eine Lösung bzw. Suspension des Alkanols in einem Kohlenwasserstoff herstellt und zu dieser eine Lösung des Aluminiumalkyls in dem gleichen oder einem anderen Kohlenwasserstoff allmählich zugibt. Diese Verfahrensweise ist zwar nicht kritisch, erlaubt aber eine einfache Kontrolle der exotherm ablaufenden Reaktion, und damit der Temperatur. Die Vorrichtung zum Durchführen der ersten Stufe kann eine einschlägig übliche sein, z.B. ein von aussen temperierbares Rührgefäss, dessen Innenraum vor Sauerstoff- und Feuchtigkeitszutritt geschützt ist und dessen Rühranlage so betrieben wird, dass sich keine substantiellen Mengen an Bodensatz bilden.

Stufe (1.2)

In ihr wird der aus Stufe (1.1) resultierende Feststoff (1.2.1), in Substanz oder mit der ihn begleitenden Flüssigkeit, und die Übergangsmetallverbindung (1.2.2) in einem flüssigen, inerten Kohlenwasserstoff zusammengebracht und das Zusammengebrachte wie angegeben analog zur ersten Stufe weiterbehandelt, wobei abermals ein Gemisch aus einem Feststoff und einer Flüssigkeit anfällt. Hierbei hat sich im allgemeinen als zweckmässig, wenn auch nicht notwendig, erwiesen, den aus der ersten Stufe resultierenden Feststoff von der ihn begleitenden Flüssigkeit abzutrennen, mit einem flüssigen, inerten Kohlenwasserstoff zu waschen, in einem ebensolchen zu suspendieren und zu der so erhaltenen Suspension dann die Übergangsmetallverbindung, gegebenenfalls in Form einer Lösung, allmählich zuzugeben. – Zur Vorrichtung zum Durchführen der zweiten Stufe gilt das zur ersten Stufe gesagte.

Stufe (1.3)

Die Durchführung dieser Stufe ist im allgemeinen empfehlenswert aber nicht unabdingbar, denn das aus der zweiten Stufe anfallende Gemisch aus Feststoff und Flüssigkeit kann ohne weiteres als solches zur Polymerisation eingesetzt werden. – Weitere Erläuterungen zur dritten Stufe erübrigen sich, da die zu treffenden Massnahmen, z.B. Abfiltrieren oder Eindampfen zur Trockene, jedem Fachmann geläufig sind.

Die neuen Vanadium enthaltenden Katalysatorkomponenten (1) lassen sich im Rahmen des eingangs definierten Verfahrens zum Herstellen der dort genannten Polymerisate so einsetzen, wie man üblicherweise die Vanadium enthaltenden Verbindungen bei der Polymerisation von Olefinen nach Ziegler einsetzt. Insoweit sind also beim erfindungsgemässen Verfahren keine Besonderheiten gegeben, und es kann auf die aus Literatur und Praxis wohlbekannten Einsatzweisen verwiesen werden. – Es ist lediglich noch zu sagen, dass das Verfahren sich vornehmlich zum Herstellen von Homopolymerisaten des Ethylens eignet, und dass im Falle des Herstellens von Copolymerisaten des Ethylens mit höheren α-Monoolefinen oder des Herstellens von Homopolymerisaten von höheren α-Monoolefinen vor allem Propen, Buten-1 und Hexen-1 als α-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Vanadium enthaltenden Katalysatorkomponenten (1) betrifft, ist im einzelnen noch das Folgende zu sagen:

Die in Stufe (1.1) einzusetzenden Alkanole (1.1.1) reichen über ein sehr weites Spektrum. So eignen sich niedermolekulare Alkanole, wie Propandiol-1,2 oder Propandiol-1,3, bis hinauf zu hochmolekularen Alkanolen mit der Struktur von Vinylalkohol-Homopolymerisaten oder Vinylalkohol-Monoolefin-Copolymerisaten, jeweils bis zu Polymerisationsgraden von 10 000. Aus Gründen der Zugänglichkeit kommen z.B. in Betracht: Die oben genannten Propandiole, Glycerin, Butandiole, Pentandiole, Hexandiole, n-Decandiol-1,10 und Butantriol-1,2,4 sowie verseifte Ethylen-Vinylacetat-Copolymerisate mit Hydroxylzahlen von 50 bis 1000 und Polymerisationsgraden von 200 bis 10 000. – Die ebenfalls in der ersten Stufe einzusetzenden Aluminiumalkyle (1.1.2) müssen der angegebenen Formel genügen, sind jedoch in diesem Rahmen die bei Ziegler-Katalysatorsystemen üblichen. In Betracht kommende Individuen sind z.B. solche mit den Formeln $Al(C_2H_5)_3$, $Al(i\text{-}C_4H_9)_3$, $Al(C_2H_5)_2(OC_2H_5)$, $Al(C_2H_5)(OC_2H_5)_2$, $Al(C_2H_5)_2Cl$ sowie Isoprenylaluminium. – Die weiterhin in der ersten Stufe einzusetzenden Kohlenwasserstoffe können die bei der dritten Stufe beschriebenen sein, wobei es im allgemeinen zweckmässig ist, die Alkanole in aliphatischen bzw. benzolischen Kohlenwasserstoffen zu lösen oder zu suspendieren und die Aluminiumalkyle in aliphatischen Kohlenwasserstoffen zu lösen.

Die in Stufe (1.2) einzusetzenden Übergangsmetallverbindungen (1.2.2) müssen wiederum den angegebenen Formeln genügen; sie sind in diesem Rahmen aber die bei Ziegler-Katalysatorsystemen üblichen. Zu dem in der zweiten Stufe ebenfalls mit einzusetzenden Kohlenwasserstoff siehe wiederum bei der dritten Stufe.

Die in Stufe (1.3) zu verwendenden flüssigen, inerten Kohlenwasserstoffe sind die unter den genannten Bedingungen siedenden und im Rahmen von Ziegler-Katalysatorsystemen üblichen. Typische Beispiele für geeignete aliphatische Kohlenwasserstoffe sind Pentane, Hexane, Heptane, Benzine und Cyclohexan, für benzolische Kohlenwasserstoffe Benzol, Toluol und Ethylbenzol.

Die Katalysatorkomponente (2) – d.h. die Aluminium enthaltende Katalysatorkomponente – betreffend ist zu sagen, dass sich im Rahmen der angegebenen Formel ebenfalls die einschlägig üblichen Verbindungen eignen; als Individuen sind z.B. zu nennen solche der Formeln $Al(C_2H_5)_3$, $Al(C_2H_5)_2Cl$, $Al(C_2H_5)_2(OC_2H_5)$, $Al(i\text{-}C_4H_9)_3$, $Al(n\text{-}C_4H_9)_3$ und $Al(C_{12}H_{25})_3$ sowie Isoprenylaluminium.

Für die Katalysatorkomponente (3) – den Promotor – eignen sich wiederum z.B. die einschlägig üblichen Halogenkohlenwasserstoffe; insbesondere eignen sich im Alkylrest chlorierte Alkylaromaten, wie seitenkettenchlorierte Alkylbenzole. Zu bevorzugen sind Benzylchlorid und Benzalchlorid.

Es versteht sich von selbst, dass die bei der Herstellung der Vanadium enthaltenden Katalysatorkomponente zu verwendenden Stoffe sowie die zur Polymerisation zu gebrauchenden Katalysatorkomponenten jeweils in Form von Einzelindividuen oder Gemischen aus zwei oder mehr Einzelindividuen eingesetzt werden können.

Abschliessend ist noch zu bemerken, dass die erfindungsgemässen Vanadium enthaltenden Katalysatorkomponenten (1) sowie deren Zwischenprodukte empfindlich gegen hydrolytische und oxidative Einflüsse sind. Insoweit sollte man beim Umgang mit diesen Substanzen also die bei Ziegler-Katalysatorsystemen einschlägig üblichen Vorsichtsmassnahmen treffen (z.B. Feuchtigkeitsausschluss, Inertgasatmosphäre).

*Beispiel 1*

(A) Herstellen der Vanadium enthaltenden Katalysatorkomponente (1).

(1.1) Erste Stufe

In einem temperierbaren Rührgefäss werden vorgelegt (1.1.1) 184 Gewichtsteile Glycerin (entsprechend 6 Molteilen Hydroxylgruppen) in der 5fachen Volumenmenge – bezogen auf das Aluminiumalkyl ($1.1.2_1$) – Toluol.

Zu dieser Vorlage gibt man unter kräftigem Rühren zunächst ($1.1.2_1$) 228 Gewichtsteile Triethylaluminium (entsprechend 6 Molteilen Alkylgruppen) in der 10fachen Volumenmenge – bezogen auf das Aluminiumalkyl ($1.1.2_1$) – n-Heptan und dann ($1.1.2_2$) 324 Gewichtsteile Diethylaluminium-n-propoxid (entsprechend 4,5 Molteilen Alkylgruppen) in der 10fachen Volumenmenge – bezogen auf das Aluminiumalkyl ($1.1.2_2$) – n-Heptan; worauf man das Ganze unter weiterer ständiger Durchmischung 0,5 Stunden auf einer Temperatur von 95° C hält.

(1.2) Zweite Stufe

In dem temperierbaren Rührgefäss werden vorgelegt (1.2.1) der aus Stufe (1.1) resultierende, von der ihn begleitenden Flüssigkeit abgetrennte und mit n-Heptan gewaschene Feststoff in der 25-fachen Volumenmenge – bezogen auf die Übergangsmetallverbindung (1.2.2) – n-Heptan.

Unter kräftigem Rühren gibt man zu dieser Vorlage (1.2.2) 193 Gewichtsteile Vanadiumtetrachlorid (entsprechend 1,0 Molteilen Übergangsmetall) und hält das Ganze unter ständiger Durchmischung 0,25 Stunden auf einer Temperatur von 80° C.

(1.3) Dritte Stufe

Aus dem in Stufe (1.2) anfallenden Gemisch aus Feststoff und Flüssigkeit wird ersterer abgetrennt, mit n-Heptan (Siedepunkt: 98° C) gewaschen und getrocknet. Die derart erhaltene Katalysatorkomponente (1) enthält 10,7 Gewichtsprozent Vanadium.

(B) Polymerisation

10 Gewichtsteile der Vanadium enthaltenden Katalysatorkomponente (1) werden in 1000 Gewichtsteilen n-Heptan suspendiert und mit 14 Gewichtsteilen Triethylaluminium (2) versetzt (die Mengen entsprechen einem Atomverhältnis Vanadium aus der Katalysatorkomponente (1) : Aluminium aus der Katalysatorkomponente (2) von etwa 1 : 5,8).

Das so erhaltene Ziegler-Katalysatorsystem wird in einen Rührautoklaven gegeben, der mit 10 000 Gewichtsteilen (entsprechend etwa 40% seines Fassungsvermögens) an n-Heptan beschickt ist. Sodann wird unter Rühren und bei den – jeweils durch Regelung konstant gehaltenen – Parametern: Ethylendruck=1,1 bar, Temperatur=60° C, über eine Zeitspanne von 2 Stunden polymerisiert, wonach die Polymerisation abgebrochen wird.

Auf diese Weise wird Polyethylen in einer Ausbeute von 270 g pro Gramm der Katalysatorkomponente (1) erhalten.

*Beispiel 2*

(A) Herstellen der Vanadium enthaltenden Katalysatorkomponente (1)

(1.1) Erste Stufe

In einem temperierbaren Rührgefäss werden vorgelegt (1.1.1) 1150 Gewichtsteile n-Decandiol-1,10 (entsprechend 13,2 Molteilen Hydroxylgruppen) in der 10fachen Volumenmenge – bezogen auf das Aluminiumalkyl (1.1.2) – Toluol.

Zu dieser Vorlage gibt man unter kräftigem Rühren (1.1.2) 1070 Gewichtsteile Triethylaluminium (entsprechend 28,2 Molteilen Alkylgruppen) in der 10fachen Volumenmenge – bezogen auf das Aluminiumalkyl (1.1.2) – n-Heptan, worauf man das Ganze unter weiterer ständiger Durchmischung 2 Stunden auf einer Temperatur von 80° C hält.

(1.2) Zweite Stufe

In dem temperierbaren Rührgefäss werden vorgelegt (1.2.1) der aus Stufe (1.1) resultierende, von der ihn begleitenden Flüssigkeit abgetrennte und mit n-Heptan gewaschene Feststoff in der 20-fachen Volumenmenge – bezogen auf die Übergangsmetallverbindung (1.2.2) n-Heptan.

Unter kräftigem Rühren gibt man zu dieser Vorlage (1.2.2) 630 Gewichtsteile Vanadiumtetrachlorid (entsprechend 3,3 Molteilen Übergangsmetall) und hält das Ganze unter ständiger Durchmischung 1 Stunde auf einer Temperatur von 25° C.

(1.3) Dritte Stufe

Aus dem in Stufe (1.2) anfallenden Gemisch aus Feststoff und Flüssigkeit wird ersterer abgetrennt, mit n-Heptan (Siedepunkt: 98° C) gewaschen und getrocknet. Die derart erhaltene Katalysatorkomponente (1) enthält 7,0 Gewichtsprozent Vanadium.

(B) Polymerisation:

10 Gewichtsteile der Vanadium enthaltenden Katalysatorkomponente (1) werden in 1000 Gewichtsteilen n-Heptan suspendiert und mit 14 Gewichtsteilen Triethylaluminium (2) versetzt (die Mengen entsprechen einem Atomverhältnis Vanadium aus der Katalysatorkomponente (1): Aluminium aus der Katalysatorkomponente (2) von etwa 1:9).

Das so erhaltene Ziegler-Katalysatorsystem wird in einen Rührautoklaven gegeben, der mit 10 000 Gewichtsteilen (entsprechend etwa 40% seines Fassungsvermögens) an n-Heptan beschickt ist. Sodann wird unter Rühren und bei den – jeweils durch Regelung konstant gehaltenen – Parametern: Ethylendruck = 1,1 bar, Temperatur= 60° C, über eine Zeitspanne von 2 Stunden polymerisiert, wonach die Polymerisation abgebrochen wird.

Hierbei wird Polyethylen in einer Ausbeute von 176 g pro Gramm der Katalysatorkomponente (1) erhalten.

*Beispiel 3*

(A) Herstellen der Vanadium enthaltenden Katalysatorkomponente (1)

(1.1) Erste Stufe

In einem temperierbaren Rührgefäss werden vorgelegt (1.1.1) 300 Gewichtsteile eines verseiften Ethylen-Vinylacetat-Copolymerisats mit einer Hydroxylzahl von 250 und einem Polymerisationsgrad von etwa 2200 (entsprechend 1,34 Molteilen Hydroxylgruppen) in der 10fachen Volumenmenge – bezogen auf das Aluminiumalkyl (1.1.2) – n-Heptan.

Zu dieser Vorlage gibt man unter kräftigem Rühren (1.1.2) 232 Gewichtsteile Diethylaluminium-n-propoxid (entsprechend 3,22 Molteilen Alkylgruppen) in der 8fachen Volumenmenge – bezogen auf das Aluminiumalkyl (1.1.2) – n-Heptan; worauf man das Ganze unter weiterer ständiger Durchmischung 3 Stunden auf einer Temperatur von 90° C hält.

(1.2) Zweite Stufe

In dem temperierbaren Rührgefäss werden vorgelegt (1.2.1) der aus Stufe (1.1) resultierende, von der ihn begleitenden Flüssigkeit abgetrennte und mit n-Heptan gewaschene Feststoff in der 30-fachen Volumenmenge – bezogen auf die Übergangsmetallverbindung (1.2.2) n-Heptan.

Unter kräftigem Rühren gibt man zu dieser Vorlage (1.2.2) 155 Gewichtsteile Vanadiumtetrachlorid (entsprechend 0,8 Molteilen Übergangsmetall) und hält das Ganze unter ständiger Durchmischung 2 Stunden auf einer Temperatur von 50° C.

(1.3) Dritte Stufe

Aus dem in der Stufe (1.2) anfallenden Gemisch aus Feststoff und Flüssigkeit wird ersterer abgetrennt durch Eindampfen zur Trockene in einem Rotationsverdampfer (T=50° C, p=2 mbar). Die derart erhaltene Katalysatorkomponente (1) enthält 6,6 Gewichtsprozent Vanadium.

(B) Polymerisation:

($B_1$)

48 Gewichtsteile der Vanadium enthaltenden Katalysatorkomponente (1) werden in 1000 Gewichtsteilen n-Heptan suspendiert und mit 400 Gewichtsteilen Tri-n-octylaluminium (2) versetzt (die Mengen entsprechen einem Atomverhältnis Vanadium aus der Katalysatorkomponente (1): Aluminium aus der Katalysatorkomponente (2) von etwa 1:17,6).

Das so erhaltene Ziegler-Katalysatorsystem wird in einen Rührautoklaven gegeben, der mit 400 000 Gewichtsteilen (entsprechend etwa 50% seines Fassungsvermögens) an i-Butan beschickt ist. Sodann wird unter Rühren und bei den – jeweils durch Regelung konstant gehaltenen – Parametern: Ethylendruck=23 bar, Wasserstoffdruck =2 bar, Temperatur=90° C, über eine Zeitspanne von 2 Stunden polymerisiert, wonach die Polymerisation abgebrochen wird.

($B_2$)

Die Polymerisation wird wiederholt, jedoch werden eingesetzt 43,1 Gewichtsteile der Katalysatorkomponente (1) und als Katalysatorkomponente (2) 300 Gewichtsteile Isoprenylaluminium (entsprechend einem Atomverhältnis V aus (1): Al aus (2) von etwa 1:30).

($B_3$)

Die Polymerisation wird nochmals wiederholt, jedoch werden eingesetzt 24,2 Gewichtsteile der Katalysatorkomponente (1) und als Katalysatorkomponente (2) 300 Gewichtsteile Isoprenylaluminium (entsprechend einem Atomverhältnis V aus (1): Al aus (2) von etwa 1:50).

Nähere Angaben zu den Verfahrensprodukten finden sich in der unten stehenden Tabelle.

*Beispiel 4*

(A) Herstellen der Vanadium enthaltenden Katalysatorkomponente (1)

(1.1) Erste Stufe

In einem temperierbaren Rührgefäss werden vorgelegt (1.1.1) 400 Gewichtsteile des auch in Beispiel 3 verwendeten verseiften Ethylen-Vinylacetat-Copolymerisats (entsprechend 1,78 Molteilen Hydroxylgruppen) in der 5fachen Volumenmenge – bezogen auf das Aluminiumalkyl ($1.1.2_1$) – n-Heptan.

Zu dieser Vorlage gibt man unter kräftigem Rühren zunächst ($1.1.2_1$) 204 Gewichtsteile Diethylaluminiumchlorid (entsprechend 3,4 Molteilen Alkylgruppen) in der 10fachen Volumenmenge – bezogen auf das Aluminiumalkyl ($1.1.2_1$) – n-Heptan und dann ($1.1.2_2$) 11,1 Gewichtsteile Triethylaluminium (entsprechend 0,29 Molteilen Alkylgruppen) in der 10fachen Volumenmenge – bezogen auf das Aluminiumalkyl ($1.1.2_2$) – n-Heptan; worauf man das Ganze unter weiterer

ständiger Durchmischung 3 Stunden auf einer Temperatur von 80° C hält.

(1.2) Zweite Stufe

In dem temperierbaren Rührgefäss werden vorgelegt (1.2.1) der aus Stufe (1.1) resultierende, von der ihn begleitenden Flüssigkeit abgetrennte und mit n-Heptan gewaschene Feststoff in der 30-fachen Volumenmenge – bezogen auf die Übergangsmetallverbindung (1.2.2) – n-Heptan.

Unter kräftigem Rühren gibt man zu dieser Vorlage (1.2.2) 160 Gewichtsteile eines Stoffes der Formel $VCl_4 \cdot 2\ TiCl_4$ (entsprechend 0,95 Molteilen Übergangsmetall) und hält das Ganze unter ständiger Durchmischung 3 Stunden auf einer Temperatur von 80° C.

(1.3) Dritte Stufe

Aus dem in Stufe (1.2) anfallenden Gemisch aus Feststoff und Flüssigkeit wird ersterer abgetrennt, mit n-Heptan (Siedepunkt: 98° C) gewaschen und getrocknet. Die derart erhaltene Katalysatorkomponente (1) enthält 2,5 Gewichtsprozent Vanadium sowie 4,9 Gewichtsprozent Titan.

(B) Polymerisation:

17 Gewichtsteile der Vanadium enthaltenden Katalysatorkomponente (1) werden in 1000 Gewichtsteilen Heptan suspendiert und mit 300 Gewichtsteilen Triethylaluminium (2) versetzt (die Mengen entsprechen einem Atomverhältnis Vanadium aus der Katalysatorkomponente (1): Aluminium aus der Katalysatorkomponente (2) von etwa 1:315).

Das so erhaltene Ziegler-Katalysatorsystem wird in einen Rührautoklaven gegeben, der mit 400 000 Gewichtsteilen (entsprechend etwa 50% seines Fassungsvermögens) an i-Butan beschickt ist. Sodann wird unter Rühren und bei den – jeweils durch Regelung konstant gehaltenen – Parametern: Ethylendruck=20 bar, Wasserstoffdruck=5 bar, Temperatur=90° C, über eine Zeitspanne von 2 Stunden polymerisiert, wonach die Polymerisation abgebrochen wird.

Nähere Angaben zu dem Verfahrensprodukt finden sich in der unten stehenden Tabelle.

| Beispiel Nr. | g Polyethylen pro g Kat.-Komp. (1) | Meltindex $MI_{2,16}$ g/10 min | Meltindex $HLMI_{21,6}$ g/10 min |
|---|---|---|---|
| $3_1$ | 3.700 | 1,43 | 80,0 |
| $3_2$ | 4.220 | 0,71 | 49,6 |
| $3_3$ | 6.070 | 1,15 | 85,1 |
| 4 | 46.500 | 0,51 | 19,8 |

**Patentanspruch**

Verfahren zum Herstellen von Homo- und Copolymerisaten von $C_2$- bis $C_6$-α-Monoolefinen durch Polymerisation des bzw. der Monomeren bei Temperaturen von 30 bis 200° C und Drücken von 1 bis 200 bar mittels eines Ziegler-Katalysatorsystems aus

(1) einer Vanadium enthaltenden Katalysatorkomponente,

(2) einer Aluminium enthaltenden Katalysatorkomponente der Formel

$$R^1-\underset{\displaystyle R^3}{\underset{|}{Al}}-R^2$$

worin stehen

$R^1$ für eine $C_1$- bis $C_{18}$-Alkylgruppe,

$R^2$ für eine $C_1$- bis $C_{18}$-Alkylgruppe und

$R^3$ für eine $C_1$- bis $C_{18}$-Alkylgruppe, eine $C_1$- bis $C_{12}$-Alkoxygruppe oder ein Chloratom sowie

(3) – gegebenenfalls – einem $C_1$- bis $C_{12}$-Halogenkohlenwasserstoff,

mit den Massgaben, das das Atomverhältnis Vanadium aus der Katalysatorkomponente (1): Aluminium aus der Katalysatorkomponente (2) im Bereich von 1:0,1 bis 1:500 und – im gegebenen Fall – das Molverhältnis Katalysatorkomponente (3): Aluminium aus der Katalysatorkomponente (2) im Bereich von 1:0,1 bis 1:60 liegt, dadurch gekennzeichnet, dass als Vanadium enthaltende Katalysatorkomponente (1) eingesetzt wird der Feststoff (F), der erhalten worden ist, indem man zunächst

(1.1) in einer ersten Stufe

(1.1.1) ein zumindest drei Kohlenstoffatome sowie zumindest zwei Hydroxylgruppen aufweisendes Alkanol und

(1.1.2) ein Aluminiumalkyl der Formel

$$R^4-\underset{\displaystyle R^6}{\underset{|}{Al}}-R^5$$

worin stehen

$R^4$ für eine $C_1$- bis $C_{18}$-Alkylgruppe,

$R^5$ für eine $C_1$- bis $C_{18}$-Alkylgruppe oder eine $C_1$- bis $C_{12}$-Alkoxygruppe, und

$R^6$ für eine $C_1$- bis $C_{18}$-Alkylgruppe, eine $C_1$- bis $C_{12}$-Alkoxygruppe oder ein Chloratom,

in der 1- bis 50fachen Volumenmenge – bezogen auf das Aluminiumalkyl (1.1.2) – eines flüssigen, inerten Kohlenwasserstoffs zusammenbringt, mit der Massgabe, dass auf 1 Mol der in dem Alkanol (1.1.1) enthaltenen Hydroxylgruppen 0,5 bis 15 Mole der in dem Aluminiumalkyl (1.1.2) enthaltenen Alkylgruppen entfallen, das Zusammengebrachte unter ständiger Durchmischung 0,2 bis 6 Stunden auf einer Temperatur im Bereich von 0 bis 120° C hält – wobei ein Gemisch aus einem Feststoff und einer Flüssigkeit resultiert –, dann

(1.2) in einer zweiten Stufe

(1.2.1) den aus Stufe (1.1) resultierenden Feststoff – gegebenenfalls ohne die ihn begleitende Flüssigkeit abgetrennt zu haben – und

(1.2.2) eine Übergangsmetallverbindung der Formel bzw. Zusammensetzung $VCl_4$, $VOCl_3$, $VO(OR^7)_3 \cdot nTi(OR^7)_4$ oder $VCl_4 \cdot nTiCl_4$ – wobei $R^7$ für eine $C_1$- bis $C_{18}$-Alkylgruppe oder eine Phenylgruppe und n für eine Zahl zwischen 0 und 9 steht,

in einem flüssigen, inerten Kohlenwasserstoff zusammenbringt, mit der Massgabe, dass auf 1 Mol der in dem Alkanol (1.1.1) ursprünglich enthaltenen Hydroxylgruppen 0,1 bis 2 Mole des in der

Übergangsmetallverbindung (1.2.2) enthaltenen Übergangsmetalls entfallen, das Zusammengebrachte unter ständiger Durchmischung 0,1 bis 10 Stunden auf einer Temperatur im Bereich von 0 bis 100° C hält – wobei abermals ein Gemisch aus einem Feststoff und einer Flüssigkeit anfällt –, und hierauf

(1.3) – gegebenenfalls – in einer dritten Stufe aus dem in Stufe (1.2) anfallenden Gemisch den Feststoff abtrennt, gewünschtenfalls mit einem unter Normalbedingungen flüssigen und unterhalb von 150° C siedenden inerten Kohlenwasserstoff wäscht sowie trocknet;

und derart mit dem gemäss Stufe (1.2) erhaltenen, im Gemisch oder dem gemäss Stufe (1.3) erhaltenen, in Substanz vorliegenden Feststoff (F) die neue Vanadium enthaltende Katalysatorkomponente (1) gewinnt.

## Revendication

Procédé de préparation d'homo- et de copolymères d'α-mono-oléfines en $C_2$ à $C_6$ par polymérisation du monomère ou des monomères à des températures de 30 à 200° C et sous des pressions de 1 à 200 bar en présence d'un système catalytique du type Ziegler, constitué de:

1) une composante catalytique au vanadium,

2) une composante catalytique à l'aluminium de la formule

$$R^1-\underset{\displaystyle R^3}{\underset{|}{Al}}-R^2$$

dans laquelle

$R^1$ désigne un groupe alkyle en $C_1$ à $C_{18}$,

$R^2$ représente un groupe alkyle en $C_1$ à $C_{18}$ et

$R^3$ désigne un groupe alkyle en $C_1$ à $C_{18}$ ou un groupe alcoxy en $C_1$ à $C_{12}$ ou un atome de chlore, et éventuellement de

3) un hydrocarbure halogéné en $C_1$ à $C_{12}$,

et dans lequel le rapport atomique du vanadium de la composante catalytique (1) à l'aluminium de la composante catalytique (2) se situe entre 1 : 0,1 et 1 : 500 et, dans le cas de l'utilisation de (3), le rapport molaire entre la composante catalytique (3) et l'aluminium de la composante catalytique (2) est compris entre 1 : 0,1 et 1 : 60, caractérisé en ce que la composante catalytique au vanadium (1) est un produit solide (F), obtenu comme suit:

(1.1) dans un premier stade, on met en contact

(1.1.1) un alcanol avec au moins trois atomes de carbone et comprenant au moins deux groupes hydroxyle et

(1.1.2) un composé d'alkylaluminium de la formule

$$R^4-\underset{\displaystyle R^6}{\underset{|}{Al}}-R^5$$

dans laquelle

$R^4$ désigne un groupe alkyle en $C_1$ à $C_{18}$,

$R^5$ représente un groupe alkyle en $C_1$ à $C_{18}$ ou un groupe alcoxy en $C_1$ à $C_{12}$ et

$R^6$ désigne un groupe alkyle en $C_1$ à $C_{18}$ ou un groupe alcoxy en $C_1$ à $C_{12}$ ou un atome de chlore, dans un hydrocarbure liquide inerte en une proportion en volume correspondant à 1-50 fois la quantité de l'alkylaluminium (1.1.2), en des proportions telles qu'à une mole de groupes hydroxyle contenus dans l'alcanol (1.1.1) correspondent 0,5 à 15 moles de groupes alkyle contenus dans l'alkylaluminium (1.1.2),

on maintient le mélange, sous agitation permanente, pendant 0,2 à 6 h à la température comprise entre 0 et 120° C, ce qui conduit à un mélange d'une matière solide et d'un liquide;

(1.2) dans un deuxième stade, on met en contact

(1.2.1) la matière solide obtenue dans le stade (1.1), séparée ou non du liquide qui l'accompagne, et

(1.2.2) un dérivé d'un métal de transition de la formule ou composition $VCl_4$, $VOCl_3$, $VO(OR^7)_3 \cdot nTi(OR^7)_4$ ou $VCl_4 \cdot nTiCl_4$, $R^7$ désignant un groupe alkyle en $C_1$ à $C_{18}$ ou phényle et n étant un nombre compris entre 0 et 9,

dans un hydrocarbure liquide inerte, en des proportions telles qu'à une mole de groupes hydroxyle initialement présents dans l'alcanol (1.1.1) correspondent entre 0,1 et 2 moles de métal de transition contenu dans le dérivé de métal de transition (1.2.2), on maintient le mélange pendant 0,1 à 10 heures, sous agitation continue, à une température comprise entre 0 et 100° C, ce qui conduit à nouveau à la formation d'un mélange d'une matière solide et d'un liquide; puis,

(1.3) dans un troisième stade éventuel,

on sépare du mélange obtenu dans le stade (1.2) la matière solide, qui peut être lavée avec un hydrocarbure inerte, qui possède un point d'ébullition inférieur à 150° C et est liquide dans les conditions normales, et séchée; le produit solide (F), obtenu en mélange dans le stade (1.2) ou en substance dans le stade (1.3), constituant la composante catalytique au vanadium (1) selon l'invention.

## Claim

A process for the production of homo- and copolymers of $C_2$-$C_6$-α-monoolefins by polymerizing the monomer or monomers at a temperature of from 30 to 200° C and a pressure of from 1 to 200 bar by means of a Ziegler catalyst system consisting of

(1) a vanadium-containing catalyst component

(2) an aluminium-containing catalyst component of the formula

$$R^1-\underset{\displaystyle R^3}{\underset{|}{Al}}-R^2$$

where $R^1$ is alkyl of 1 to 18 carbon atoms, $R^2$ is alkyl of 1 to 18 carbon atoms, and $R^3$ is alkyl of 1 to 18 carbon atoms, alkoxy of 1 to 12 carbon atoms, or chlorine, and, if desired,